# EUROPÄISCHE PATENTSCHRIFT

(11) **EP 0 458 097 B1**
(45) Veröffentlichungstag und Bekanntmachung des Hinweises auf die Patenterteilung: **28.01.1998**
(21) Anmeldenummer: 91107090.2
(22) Anmeldetag: 02.05.1991
(51) Int. Cl.: H04L 25/49, H03M 7/00

(54) **Verfahren zur Datenübertragung**
Data transmission method
Méthode de transmission de données

(30) Priorität: 10.05.1990 DE 4014931
(43) Veröffentlichungstag der Anmeldung: 27.11.1991
(73) Patentinhaber: TEMIC TELEFUNKEN microelectronic GmbH, 74072 Heilbronn (DE)
(72) Erfinder: Moser, Helmut, W-7100 Heilbronn (DE)
(74) Vertreter: Maute, Hans-Jürgen, Dipl.-Ing.

(56) Entgegenhaltungen:
- DE-A- 3 717 886

## Beschreibung

Bei Verfahren zur Datenübertragung in Digitaltechnik werden mittels einer Datenübertragungsstrecke Informationen in Form von digitalisierten Datenpaketen zwischen einem Sender und einem Empfänger übertragen. Die Datenübertragung kann beispielsweise im Infrarot-Bereich, Radiofrequenz-Bereich oder Ultraschall-Bereich mit den entsprechenden geeigneten Sendeeinrichtungen, Empfangseinrichtungen und Übertragungsstrecken erfolgen. Die digitalisierten Datenpakete oder Binärfolgen, die sogenannten Binärworte, werden dabei in Form von Rechteckpulsen übertragen.

In der Literaturstelle W.S. Jahn: "Elektrisch Messen, Zählen und Registrieren", 1. Aufl. 1964, R. Pflaum Verlag München, S. 51-53, wird eine allgemeine Einführung in die elektrische Fernübertragung von Meßgrößen gegeben. Im Kapitel über die Impulsübertragung wird ausgeführt, daß bei sog. Impulszeitverfahren die Zeitdauer der Impulse bzw. Pausen ein Maß für den zu übertragenden Meßwert darstellt. Bei diesem Datenübertragungsverfahren und auch bei anderen Standard-Datenübertragungsverfahren wird für jede an den Empfänger auszugebende bzw. an diesen zu übertragende digitalisierte Informationseinheit - d. h. für jedes vom Sender abgestrahlte Bit ein Übertragungspuls benötigt. Um die beiden unterschiedlichen Informationen "0" und "1" des Binärcodes zu codieren, werden die Pulse entweder zu unterschiedlichen Zeitpunkten innerhalb eines festgelegten Zeitintervalls abgestrahlt - beispielsweise mittels Pulspausenmodulation - oder mittels unterschiedlicher Frequenzen moduliert.
Da für jedes zu übertragende Bit vom Sender ein Puls abgestrahlt werden muß, ist der Energiebedarf für die Datenübertragung auf der Senderseite recht hoch. Zudem ist bei diesem Übertragungsmodus die Störsicherheit nicht allzu groß; um diese zu verbessern, sind aufwendige Maßnahmen - beispielsweise zweifache Übertragung der Information mit einem anschließenden Vergleich vonnöten.

Der Erfindung liegt die Aufgabe zugrunde, ein neues Übertragungsprinzip für ein Verfahren zur Datenübertragung anzugeben, bei dem der Energiebedarf auf der Senderseite reduziert und die Störsicherheit verbessert werden kann.

Dies wird erfindungsgemäß durch die Merkmale im Kennzeichen des Patentanspruchs 1 erreicht.

Vorteilhafte Weiterbildungen der Erfindung ergeben sich aus den Unteransprüchen.

Gemäß der Erfindung wird das Binär-Gesamtwort in mindestens ein Teilwort mit variabler Bitzahl unterteilt, wobei die Zahl der Teilworte und die Bitzahl pro Teilwort - vorzugsweise mittels eines Rechners - für eine bestimmte Bitzahl des Gesamtwortes fest vorgegeben wird.

Jedem Teilwort wird eine bestimmte - von der Bitzahl des Teilworts abhängige - Zahl von Positionen zugeordnet, wobei jede Position für eine bestimmte Bitfolge codiert; für die verschiedenen Teilworte kann diese Codierung unterschiedlich ausfallen.

Zur Datenübertragung wird - optional nach Aussendung eines Startbit-Pulses - vom Sender innerhalb jedes Teilworts ein Übertragungspuls an einer bestimmten Position abgestrahlt; dieser Positionsbit-Puls wird vom Empfänger detektiert und die der jeweiligen Position entsprechende Bitfolge zugeordnet. Die übertragenen Bitfolgen der einzelnen Teilworte werden vom Empfänger zum Binär-Gesamtwort zusammengesetzt; dieser gibt nach der Decodierung des Gesamtwortes ein der übertragenen Information entsprechendes Ausgangssignal ab.

Da gemäß der Erfindung also bereits ein einziger vom Sender abgestrahlter Übertragungspuls (der Positionsbit-Puls) für ein Teilwort mit einer Binär-Bitfolge aus mehreren Bits und nicht nur für ein einzelnes Bit codiert, sind zur Übertragung eines n-Bit-Binär-Gesamtwortes anstatt n-Übertragungspulsen weitaus weniger Übertragungspulse nötig; der Energiebedarf für den Sender kann also deutlich reduziert werden. Die Aufteilung des Binär-Gesamtwortes in Teilworte, d. h. die Anzahl der Teilworte und deren jeweilige Bitzahl, kann nach Maßgabe der Gesamt-Bitzahl des Binär-Gesamtworts optimiert werden, um einen minimalen Energiebedarf bzw. Übertragungsaufwand zu erhalten. Diese Aufteilung bzw. Zuordnung wird vorzugsweise durch einen Rechner fest vorgegeben, der auch den zeitlichen Ablauf im Sender und Empfänger, sowie die Koordination zwischen Sender und Empfänger steuert.

Neben einer Verringerung des Energiebedarfs kann durch die Reduzierung der zur Datenübertragung benötigten Pulse auch eine wesentliche Verbesserung der Störsicherheit erreicht werden.

Darüber hinaus kann den Positionsbit-Pulsen - in Abhängigkeit vom jeweiligen Teilwort oder von der Position innerhalb eines Teilworts - eine unterschiedliche Charakteristik zugeordnet werden; da der Empfänger diese Charakteristik erkennen muß und verifiziert, kann dadurch die Störsicherheit weiter erhöht werden. Eine bessere Fehlerauswertung kann beispielsweise erreicht werden, wenn die Pulsbreite der Positionsbit-Pulse in aufeinanderfolgenden Teilworten oder innerhalb des Teilworts in Abhängigkeit der Position gerade/ungerade variiert wird. Die unterschiedliche Pulsbreite kann durch eine Variation der Pulsdauer oder - falls die Pulse mit einer bestimmten Frequenz moduliert sind - durch eine Variation der Zahl der Schwingungsperioden eingestellt werden. Alternativ zur Variation der Pulsbreite kann auch die Schwingungsfrequenz, mit der die Übertragungspulse moduliert sind, variiert werden.

Zusätzlich oder alternativ zur Änderung der Charakteristik der Übertragungspulse besteht die Möglichkeit, einen additiven Hilfsbit-Puls - der selbst für keine Information codiert - vor dem Startbit-Puls auszusenden; die Datenübertragung mittels der Positionsbit-Pulse bzw. die Auswertung durch den Empfänger wird nur dann gestartet, wenn der Hilfsbit-Puls in einem bestimmten - vorher festgelegten - zeitlichen Abstand vor dem Startbit-Puls vom Sender zum Empfänger übertragen wurde.

Wegen des geringen Energiebedarfs beim Verfahren zur Datenübertragung nach der Erfindung kann als weiterer Kontrollmechanismus und zur Codeabsicherung der vorher übertragenen Information ein sich an das letzte Teilwort des Binär-Gesamtwortes anschließendes zusätzliches Kontroll-Teilwort übertragen werden. In diesem Kontroll-Teilwort wird beispielsweise ein Positionsbit-Puls immer an einer vorbestimmten Position des Teilworts ausgegeben oder es wird eine Paritäts- oder Summenbildung auf der Grundlage der vorher übertragenen Binär-Bitfolgen der einzelnen Teilworte vorgenommen; dadurch können Übertragungsfehler leicht erkannt und die üblichen doppelten Übertragungen der Information zur Fehlererkennung vermieden werden.

Die Erfindung soll nachstehend anhand der Figuren 1 bis 3 näher beschrieben werden.

Dabei ist in der Figur 1 der schematische Aufbau eines Datenübertragungssystems, in der Figur 2 das Codierungsprinzip eines n-Bit-Binär-Gesamtwortes und in der Figur 3 das zeitliche Schema der Datenübertragung bei einem 16-Bit-Binär-Gesamtwort dargestellt.

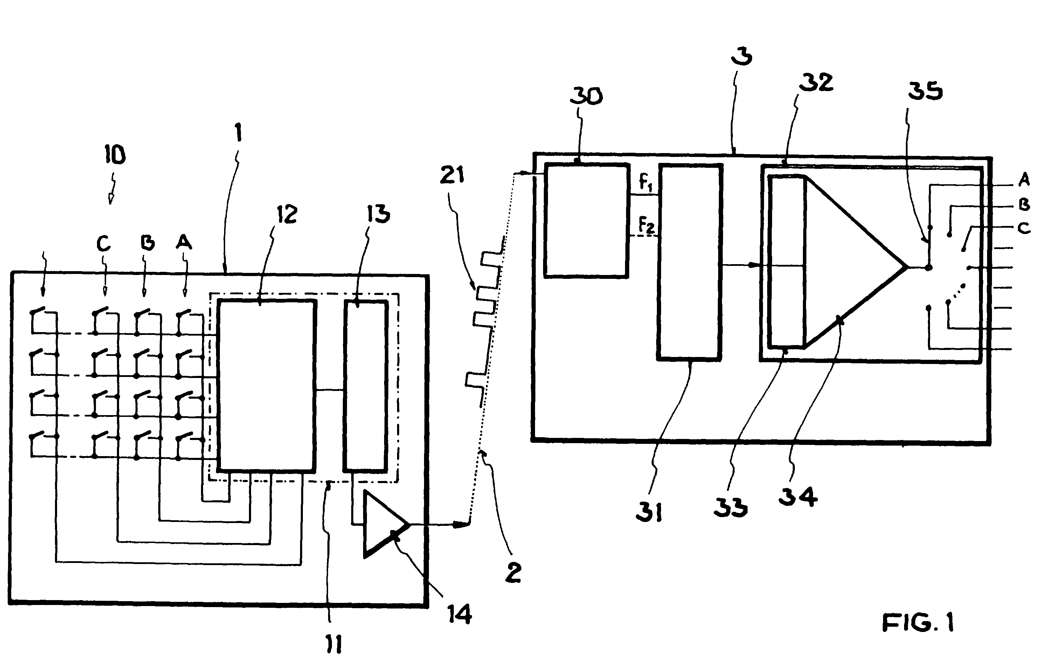

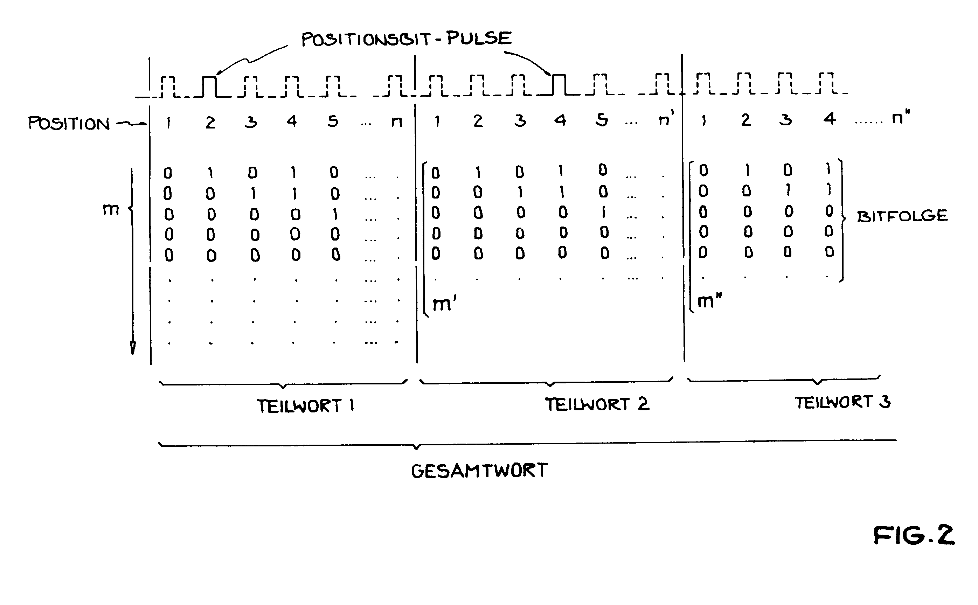

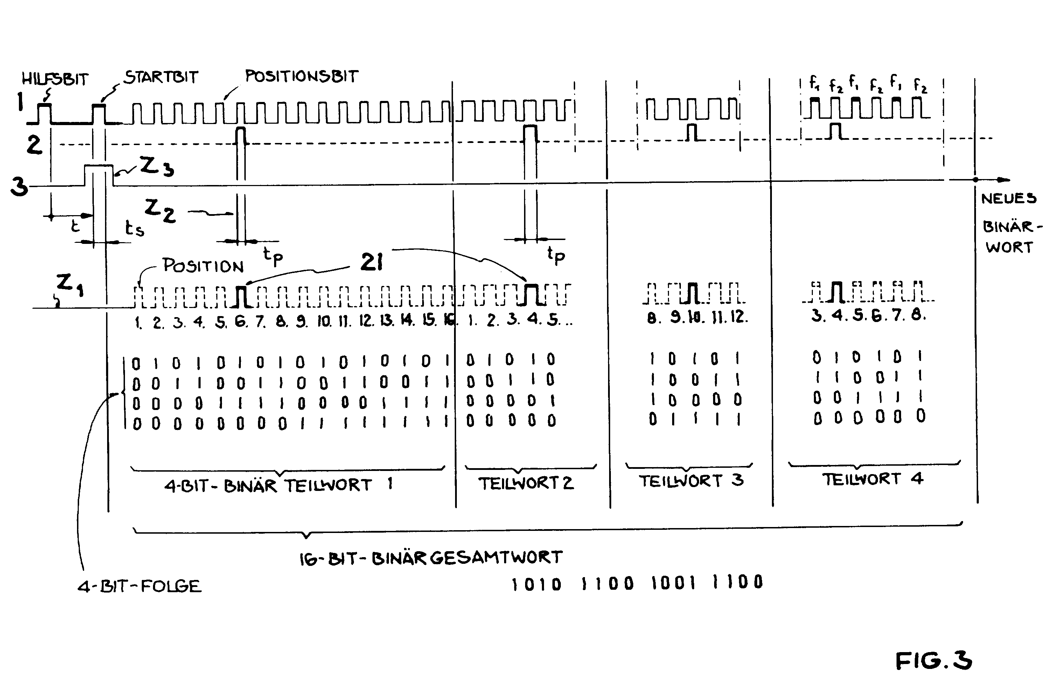

Gemäß der Figur 1 ist das Datenübertragungssystem aus dem Sender 1, der Übertragungsstrecke 2 und dem Empfänger 3 aufgebaut.

Durch den Sender 1 wird die zu übertragende Information vorgegeben, codiert und am Senderausgang ausgegeben. In der Figur 1 wird die Information über eine gedrückte Taste A, B, C etc. der Tastatur 10 mittels des Sende-Rechners 11, der beispielsweise aus der eigentlichen Sendeeinrichtung 13 und dem Tastatur-Encoder 12 besteht, in ein Binär-Gesamtwort umgewandelt. Der Tastatur-Encoder 12 ist eine Steuerlogik zur Aufbereitung des Übertragungssignals und zur Regelung des zeitlichen Ablaufs des Sendesignals, beispielsweise zur Unterteilung des Binär-Gesamtwortes in die einzelnen Teilworte und zur Bereitstellung der einzelnen Übertragungspulse 21. Der Treiber 14, beispielsweise ein Leistungsverstärker, gibt die Übertragungspulse 21 auf die Datenübertragungsstrecke 2.

Die Datenübertragung mittels der Datenübertragungsstrecke2 kann beispielsweise im Infrarot-Bereich, im Radiofrequenz-Bereich oder im Ultraschall-Bereich trägerlos oder über feste Drähte/Leitungen erfolgen. Die bei einer Betätigung der Tastatur 10, beispielsweise durch Drücken einer bestimmten Taste A, B, C, ... vom Sender 1 ausgegebene charakteristische Folge von Übertragungspulsen 21 wird vom Empfänger 3 ausgewertet, indem er die übertragene Pulsfolge detektiert, decodiert und ein - für die gedrückte Taste des Senders 1 charakteristisches - Ausgangssignal abgibt. Dazu enthält der Empfänger 3 einen Wandler 30, der den Übertragungspuls 21 in ein elektrisches Signal umwandelt, einen Vorverstärker 31, der beispielsweise zur Unterscheidung von zwei unterschiedlichen Frequenzen f₁ und f₂ zwei selektive Eingänge besitzen kann, und einen Empfänger-Rechner 32, der eine Zählereinheit 33 mit den Zeitzählern Z₁ bis Z₃ sowie eine Decodiereinrichtung 34 mit dem Schalter 35 umfaßt. Das decodierte Signal wird, beispielsweise als HIGH- oder LOW-Logikpegel, auf einer der Leitungen A, B, C, ... ausgegeben, die jeweils der gedrückten Taste zugeordnet sind.

Bei einem Daten übertragungssystem im IR-Bereich, beispielsweise einer IR-Fernbedienung, werden durch den Treiber 14, der beispielsweise einen Transistor und eine IR-Sendediode umfaßt, IR-Übertragungspulse 21 abgestrahlt, die beispielsweise mit einer Frequenz von 40 kHz moduliert sind. Das derart modulierte IR-Sendesignal wird im Wandler 30 - beispielsweise eine IR-Empfangsdiode - in eine elektrische Spannung bzw. einen elektrischen Strom umgewandelt. Der Vorverstärker 31 enthält einen Integrator, der das modulierte Signal glättet und dem Empfänger-Rechner 32 zuführt. Am Empfängerausgang ist beispielsweise ein Schaltmodul angeschlossen, das in Abhängigkeit der gedrückten Taste gesteuert wird.

Das zur Datenübertragung verwendete Codierungsprinzip der Übertragungspulse ist schematisch in der Figur 2 dargestellt.

Das Binär-Gesamtwort wird in mehrere Teilworte unterteilt; in der Figur 2 sind drei Teilworte dargestellt, wobei das erste Teilwort 1 m-Bits, das zweite Teilwort 2 m'-Bits und das Teilwort 3 m"-Bits aufweist. Die Zahl der Positionen n (n', n") innerhalb der Teilworte ist durch die Beziehung n = 2^{m} gegeben; d. h. das erste Teilwort weist 2^{m}, das zweite Teilwort 2^{m'}, das dritte Teilwort 2^{m"} Positionen auf. Verschiedene Teilworte können unterschiedliche Bitzahlen m, m', m" und damit auch eine unterschiedliche Zahl an Positionen n, n', n" besitzen.

Jede Position innerhalb eines Teilworts codiert für eine bestimmte Binär-Bitfolge mit m (m', m") Bits, so daß in jedem Teilwort alle Bitkombinationen, die mit den Bits der Teilworte gebildet werden können, den unterschiedlichen Positionen zugeordnet werden. Die Aufteilung des Binär-Gesamtwortes in die Teilworte, die Zahl der Bits pro Teilwort und die Zuordnung der jeweiligen Positionen zu den korrespondierenden Binär-Bitfolgen wird vor der Datenübertragung festgelegt und in einem Speicher abgespeichert. Diese Festlegung kann für eine bestimmte Bitzahl des Binär-Gesamtwortes entweder hardwaremäßig durch eine feste Verdrahtung oder softwaremäßig, beispielsweise mittels eines Mikroprozessors, vorgenommen werden. Diese Aufteilung bzw. Zuordnung kann sehr flexibel gewählt werden, in verschiedenen Teilworten können der gleichen Position unterschiedliche Binär-Bitfolgen zugeordnet werden.

Innerhalb jedes Teilworts wird durch den vom Sender ausgegebenen Positionsbit-Puls an einer Position 1 ... n (n', n") diesem im Empfänger die an der jeweiligen Position codierte Binär-Bitfolge zugeordnet. Gemäß Figur 2 wird beispielsweise im Teilwort 1 der Positionsbit-Puls an der Position 2 ausgegeben und die Binär-Bitfolge 10000 ... übertragen, im Teilwort 2 wird der Positionsbit-Puls an der Position 4 ausgegeben und die Binär-Bitfolge 11000 ... übertragen usw.

Anhand der Figur 3 wird das Prinzip und der zeitliche Ablauf der Datenübertragung bei einem 16-Bit-Binär-Gesamtwort erläutert.

Das zu übertragende 16-Bit-Binär-Gesamtwort - gemäß der Figur 3 beispielsweise die Binär-Bitfolge 1010110010011100 - wird vor der Übertragung in 4 gleiche Teilworte mit jeweils 4 Bit zerlegt, so daß jedes Teilwort 2⁴ = 16 Positionen 1 bis 16 aufweist. Je nachdem an welcher Position 1 bis 16 der Positionsbit-Puls vom Sender 1 ausgegeben wird, wird diesem im Empfänger 3 in Abhängigkeit der Position eine 4-Bitfolge 0000 bis 1111 zugeordnet; in der Figur 3 wurde dabei für alle Teilworte 1 bis 4 die gleiche Zuordnung Position/Binär-Bitfolge gewählt. Für das zu übertragende 16-Bit-Binär-Gesamtwort müssen gemäß der oben gewählten Unterteilung in 4 gleiche Teilworte beispielsweise die Positionsbit-Pulse im Teilwort 1 an der Position 6 (Binär-Bitfolge 1010), im Teilwort 2 an der Position 4 (Binär-Bitfolge 1100), im Teilwort 3 an der Position 10 (Binär-Bitfolge 1001) und im Teilwort 4 an der Position 4 (Binär-Bitfolge 1100) stehen.

Im Empfänger 3 wird nach der Übertragung des Startbit-Pulses der erste Zeitzähler Z₁ gestartet, der - in Kenntnis der Länge der jeweiligen Teilworte, d. h. der Zahl der Positionen - den zeitlichen Ablauf innerhalb der Teilworte überwacht. Durch den ersten Zeitzähler Z₁ wird also die Position innerhalb der Teilworte markiert bzw. festgelegt, bei welcher Position der Positionsbit-Puls vom Sender 1 abgestrahlt wurde. Beim Erkennen des ersten Positionsbit-Pulses wird diesem vom Empfänger 3 das erste 4-Bit-Teilwort 1010, nach Erkennen des zweiten Positionsbit-Pulses das zweite 4-Bit-Teilwort 1100 zugeordnet usw.

Nachdem das letzte 4-Bit- Teilwort 4 (1100) vom Empfänger 3 erkannt wurde, werden die Binär-Bitfolgen der einzelnen Teilworte zum Binär-Gesamtwort zusammengesetzt; nach der Decodierung des Binär-Gesamtwortes wird ein Ausgangssignal abgegeben. Der zeitliche Zyklus kann nun von vorne beginnen, d. h. der Empfänger 3 ist zum Empfang eines neuen Binär-Gesamtwortes bereit. Das weitere Binär-Gesamtwort kann eine Wiederholung der gesendeten Information sein - beispielsweise bei längerem Drücken einer Taste des Senders 1 - oder eine neue Information darstellen - beispielsweise beim Drücken einer anderen Taste des Senders 1. Der erste Zeitzähler Z₁ wird zu Beginn der Übertragung des neuen Binär-Gesamtwortes, beispielsweise vom Mikroprozessor, wieder initialisiert.

Zur Fehlererkennung und als Kontrollmöglichkeit bei der Datenübertragung ist ein zweiter Zeitzähler Z₂ vorgesehen, der die Pulsbreite tₛ des Startbit-Pulses sowie der Positionsbit-Pulse tₚ überwacht. Beispielsweise können geraden/ungeraden Positionen - wie gemäß Figur 3 für das Teilwort 3 dargestellt - oder aufeinanderfolgenden Teilworten - gemäß Figur 3 den Teilworten 1 und 2 - unterschiedliche Pulsbreiten der Übertragungspulse 21 zugeordnet werden. Dies kann beispielsweise durch eine Variation der Pulsdauer - oder bei modulierten Übertragungspulsen - durch eine unterschiedliche Zahl an Schwingungsperioden der Modulationsfrequenz erreicht werden. Bei fehlerhafter Pulsbreite erfolgt vom Empfänger 3 keine Auswertung des Datenübertragungssignals.

Anstatt die Pulsbreite tₚ zu variieren, können den verschiedenen abgestrahlten Positionsbit-Pulsen unterschiedliche Modulations-Frequenzen zugeordnet werden; dies ist beispielhaft in der Figur 3 für die beiden Frequenzen f₁ und f₂ im Teilwort 4 dargestellt, wobei die Frequenz abhängig von der Position gerade/ungerade geändert wird.

Eine Fehlererkennung liegt auch dann vor - d. h. die Auswertung des Datenübertragungssignals wird vom Empfänger 3 ebenfalls nicht gestartet, wenn die Zeit t zwischen Hilfsbit-Puls und Startbit-Puls nicht innerhalb eines vorher festgelegten Zeitintervalls bzw. Fensters liegt; diese Zeit t wird von einem dritten Zeitzähler Z₃ überwacht.

Aufgrund dieser Fehlererkennungsmethoden bzw. Kontrollmechanismen kann die Datenübertragung, neben einer Reduzierung ihres Energiebedarfs auch sehr sicher realisiert werden. Damit können die normalerweise - beispielsweise bei Infrarot-Datenübertragungen - üblichen Doppelwort-Datenübertragungen mit anschließendem Wortvergleich entfallen.

Das erfindungsgemäße Verfahren zur Datenübertragung kann beispielsweise in Infrarot-Fernbedienungen in der Fernsehtechnik oder im Automobilsektor für das Öffnen oder Schließen von Türen etc. eingesetzt werden. Denkbar sind auch Verfahren zur Datenübertragung im Radiofrequenzbereich oder in anderen Wellenlängenbereichen des elektro-magnetischen Spektrums.

## Patentansprüche

1. Verfahren zur Datenübertragung, bei dem über eine Datenübertragungsstrecke (2) digitalisierte Informationen durch Binär-Gesamtworte von einem Sender (1) zu einem Empfänger (3) übertragen werden, dadurch gekennzeichnet,
- daß ein Binär-Gesamtwort mit definierter Gesamt-Bitzahl in mindestens ein Teilwort unterteilt wird, wobei die jeweilige Bitzahl der Teilworte unterschiedlich sein kann,
- daß einem Teilwort mit bestimmter Bitzahl alle mittels dieser Bitzahl bildbaren Binär-Bitfolgen zugeordnet werden,
- daß die verschiedenen Binär-Bitfolgen als unterschiedliche Positionen innerhalb eines Teilworts codiert werden,
- und daß für jedes Teilwort genau eine dieser Binär-Bitfolgen vom Sender (1) zum Empfänger (3) mittels eines Übertragungspulses (21) übertragen wird.

2. Verfahren nach Anspruch 1, dadurch gekennzeichnet, daß bei der Übertragung der Binär-Bitfolgen für jedes Teilwort
- vom Sender (1) der Übertragungspuls (21) in Form eines Rechteckpulses als Positionsbit-Puls an derjenigen Position innerhalb des Teilworts abgestrahlt wird, an der die zu übertragende Binär-Bitfolge codiert wurde,
- vom Empfänger (3) dem Übertragungspuls (21) diejenige Binär-Bitfolge zugeordnet wird, die der Position des Übertragungspulses (21) entspricht.

3. Verfahren nach Anspruch 1 oder 2, dadurch gekennzeichnet, daß die durch die Übertragungspulse (21) in den einzelnen Teilworten übertragenen Binär-Bitfolgen vom Empfänger (3) zum Binär-Gesamtwort zusammengesetzt werden, und daß mittels einer Decodiereinrichtung (34) ein der übertragenen Information entsprechendes Ausgangssignal abgegeben wird.

4. Verfahren nach einem der Ansprüche 1 bis 3, dadurch gekennzeichnet, daß die Unterteilung der Binär-Gesamtworte in die einzelnen Teilworte sowie die jeweilige Bitzahl der Teilworte vor der Datenübertragung durch einen Rechner (11, 32) festgelegt wird, der auch die zeitliche Koordination zwischen Sender (1) und Empfänger (3) steuert.

5. Verfahren nach einem der Ansprüche 2 bis 4, dadurch gekennzeichnet, daß der zeitliche Ablauf der Datenübertragung im Empfänger (3) durch eine in einem Empfänger-Rechner (32) integrierte Zähleinheit (33) mit Zeitzählern (Z₁, Z₂, Z₃) gesteuert wird.

6. Verfahren nach Anspruch 5, dadurch gekennzeichnet, daß ein erster Zeitzähler (Z₁) die Position der Positionsbit-Pulse in den einzelnen Teilworten markiert.

7. Verfahren nach Anspruch 5 oder 6, dadurch gekennzeichnet, daß ein zweiter Zeitzähler (Z₂) die Pulsbreite (tₚ) der Positionsbit-Pulse überwacht.

8. Verfahren nach einem der Ansprüche 2 bis 7, dadurch gekennzeichnet, daß vom Sender (1) vor dem ersten Positionsbit-Puls ein Startbit-Puls in Form eines Rechteckpulses abgestrahlt wird.

9. Verfahren nach einem der Ansprüche 2 bis 8, dadurch gekennzeichnet, daß vom Sender (1) nach dem Positionsbit-Puls des letzten Teilworts ein zusätzlicher Positionsbit-Puls für ein Kontroll-Teilwort abgestrahlt wird, das zur Codeabsicherung der vorher übertragenen Information dient

10. Verfahren nach Anspruch 9, dadurch gekennzeichnet, daß der Positionsbit-Puls des Kontroll-Teilworts immer an der gleichen Position abgestrahlt wird und diesem somit immer die gleiche Binär-Bitfolge im Empfänger (3) zugeordnet wird.

11. Verfahren nach Anspruch 9, dadurch gekennzeichnet, daß die Position des Positionsbit-Pulses des Kontroll-Teilworts durch Paritätsbildung oder Addition der vorher übertragenen Binär-Bitfolgen des Binär-Gesamtwortes bestimmt wird.

12. Verfahren nach Anspruch 8, dadurch gekennzeichnet, daß vom Sender (1) vor dem Startbit-Puls ein Hilfsbit-Puls abgestrahlt wird, und daß die Datenübertragung nur dann gestartet wird, wenn der zeitliche Abstand (t) zwischen Hilfsbit-Puls und Startbit-Puls innerhalb eines durch einen dritten Zeitzähler (Z₃) vorgegebenen Intervalls liegt.

13. Verfahren nach einem der Ansprüche 8 oder 12, dadurch gekennzeichnet, daß die Pulsbreite (t_{S}) des Startbit-Pulses durch den zweiten Zeitzähler (Z₂) bestimmt wird, und daß die Datenübertragung nur dann gestartet wird, wenn die Pulsbreite (t_{S}) innerhalb eines vorgegebenen Intervall liegt.

14. Verfahren nach einem der Ansprüche 2 bis 13, dadurch gekennzeichnet, daß den Positionsbit-Pulsen in Abhängigkeit des Teilworts und/oder der Position innerhalb des Teilworts eine unterschiedliche Charakteristik zugeordnet wird.

15. Verfahren nach Anspruch 14, dadurch gekennzeichnet, daß den Positionsbit-Pulsen in aufeinanderfolgenden Teilworten eine alternierende Charakteristik zugeordnet wird.

16. Verfahren nach Anspruch 14, dadurch gekennzeichnet, daß den Positionsbit-Pulsen in aufeinanderfolgenden Positionen innerhalb eines Teilworts eine alternierende Charakteristik zugeordnet wird.

17. Verfahren nach einem der Ansprüche 14 bis 16, dadurch gekennzeichnet, daß die Pulsbreite der Positionsbit-Pulse variiert wird.

18. Verfahren nach Anspruch 17, dadurch gekennzeichnet, daß zur Variation der Pulsbreite der Positionsbit-Pulse die Pulsdauer der Positionsbit-Pulse unterschiedlich gewählt wird.

19. Verfahren nach Anspruch 17, dadurch gekennzeichnet, daß zur Variation der Pulsbreite der Positionsbit-Pulse die Zahl der Schwingungsperioden einer Modulationsfrequenz unterschiedlich gewählt wird.

20. Verfahren nach einem der Ansprüche 14 bis 16, dadurch gekennzeichnet, daß die Frequenz der Positionsbit-Pulse variiert wird.

21. Verfahren nach Anspruch 20, dadurch gekennzeichnet, daß zwei unterschiedliche Frequenzen (f₁, f₂) gewählt werden.

## Claims

1. Method of transmitting data in which items of digital information are transmitted over a data transmission path (2) from a transmitter (1) to a receiver (3) by means of whole binary words, characterised in
- that a whole binary word having a defined total number of bits is sub-divided into at least one sub-word, whereby the respective number of bits in the sub-words may be different,
- that, for a sub-word having a certain number of bits, all of the binary bit trains that are formable by means of this number of bits are associated with said sub-word,
- that the different binary bit trains are encoded in the form of differing positions within a sub-word,
- and that, for each sub-word. exactly one of these binary bit trains is transferred from the transmitter (1) to the receiver (3) by means of a transmission pulse (21).

2. Method in accordance with Claim 1, characterised in that when transferring the binary bit trains for each sub-word
- the transmission pulse (21) is emitted by the transmitter (1) in the form of a rectangular pulse as a position bit pulse at that position within the sub-word at which the binary bit train to be transferred was encoded.
- that particular binary bit train which corresponds to the position of the transmission pulse (21) is associated with the transmission pulse (21) by the receiver (3).

3. Method in accordance with Claim 1 or 2, characterised in that the binary bit trains transferred by the transmission pulses (21) in the individual sub-words are combined into the whole binary word by the receiver (3) and that an output signal corresponding to the information transferred is furnished by means of a decoding device (34).

4. Method in accordance with any of the Claims 1 to 3, characterised in that the sub-division of the whole binary word into the individual sub-words and also the number of bits in the respective sub-words is determined before the data transmission process by a computer (11. 32) which also controls the co-ordination in time between the transmitter (1) ) and the receiver (3).

5. Method in accordance with any of the Claims 2 to 4, characterised in that the timing of the data transmission process in the receiver (3) is controlled by a counter unit (33) which is integrated in a receiver-computer (32) and which comprises time counters (Z₁, Z₂, Z₃).

6. Method in accordance with Claim 5, characterised in that a first time counter (Z₁) marks the position of the position bit pulses in the individual sub-words.

7. Method in accordance with Claim 5 or 6, characterised in that a second time counter (Z₂) monitors the pulse width (tₚ) of the position bit pulses.

8. Method in accordance with any of the Claims 2 to 7, characterised in that a start bit pulse is emitted in the form of a rectangular pulse by the transmitter (1) before the first position bit pulse.

9. Method in accordance with any of the Claims 2 to 8. characterised in that an additional position bit pulse for a check sub-word. which serves to protect the encoding of the previously transferred information, is radiated by the transmitter (1) after the position bit pulse of the last sub-word.

10. Method in accordance with Claim 9, characterised in that the position bit pulse of the check sub-word is always emitted at the same position and hence the same binary bit train is always associated therewith in the receiver (3).

11. Method in accordance with Claim 9, characterised in that the position of the position bit pulse in the check sub-word is determined by forming the parity or by adding the previously transferred binary bit trains of the whole binary word.

12. Method in accordance with Claim 8, characterised in that an auxiliary bit pulse is emitted by the transmitter (1) before the start bit pulse and that the data transferral process is only started when the time interval (t) between the auxiliary bit pulse and the start bit pulse lies within an interval defined by a third time counter (Z₃).

13. Method in accordance with either of the Claims 8 or 12, characterised in that the pulse width (t_{S}) of the start bit pulse is determined by the second time counter (Z₂) and that the data transferral process is only started when the pulse width (t_{S}) lies within a predetermined interval.

14. Method in accordance with any of the Claims 2 to 13, characterised in that a differing characteristic is associated with the position bit pulses in dependence on the sub-word and/or the position within the sub-word.

15. Method in accordance with Claim 14, characterised in that an alternating characteristic is associated with the position bit pulses in successive sub-words.

16. Method in accordance with Claim 14, characterised in that an alternating characteristic is associated with the position bit pulses in successive positions within a sub-word.

17. Method in accordance with any of the Claims 14 to 16, characterised in that the pulse width of the position bit pulses is varied.

18. Method in accordance with Claim 17, characterised in that differing pulse durations of the position bit pulses are selected for varying the pulse width of the position bit pulses.

19. Method in accordance with Claim 17, characterised in that differing numbers of oscillatory periods of a modulation frequency are selected for varying the pulse width of the position bit pulses.

20. Method in accordance with any of the Claims 14 to 16, characterised in that the frequency of the position bit pulses is varied.

21. Method in accordance with Claim 20, characterised in that two differing frequencies (f₁, f₂) are selected.

## Revendications

1. Procédé de transmission de données, selon lequel, par l'intermédiaire d'une voie de transmission de données (2), des informations numérisées sont transmises par des mots globaux binaires depuis un émetteur (1) vers un récepteur (3), caractérisé
- en ce qu'un mot global binaire à nombre de bits global défini est subdivisé en au moins un mot partiel, le nombre de bits respectifs des mots partiels pouvant être différent,
- en ce qu'à un mot partiel à nombre de bits déterminé sont associées toutes les successions de bits binaires pouvant être formées au moyen de ce nombre de bits,
- en ce que les différentes successions de bits binaires sont codées en tant que positions différentes à l'intérieur d'un mot partiel,
- et en ce que, pour chaque mot partiel, exactement une de ces successions de bits binaires est transmise de l'émetteur (1) au récepteur (3) au moyen d'une impulsion de transmission (21).

2. Procédé selon la revendication 1, caractérisé en ce que, dans le cas de la transmission des successions de bits binaires pour chaque mot partiel
- par l'émetteur (1) est émise l'impulsion de transmission (21) sous la forme d'une impulsion rectangulaire en tant qu'impulsion de bit de position en cette position à l'intérieur du mot partiel, à laquelle la succession de bits binaires à transmettre a été codée,
- par le récepteur (3) est associée à l'impulsion de transmission (21) cette succession de bits binaires qui correspond à la position de l'impulsion de transmission (21).

3. Procédé selon la revendication 1 ou 2, caractérisé en ce que les successions de bits binaires transmises par les impulsions de transmission (21) dans les différents mots partiels sont composées par le récepteur (3) en mot global binaire, et en ce qu'au moyen d'un dispositif de décodage (34) est délivré un signal de sortie correspondant à l'information transmise.

4. Procédé selon l'une quelconque des revendications 1 à 3, caractérisé en ce que la division du mot global binaire en différents mots partiels ainsi que le nombre de bits respectifs des mots partiels est déterminée avant la transmission de données par un calculateur (11, 32), qui commande également la coordination temporelle entre l'émetteur (1) et le récepteur (3).

5. Procédé selon l'une quelconque des revendications 2 à 4, caractérisé en ce que le déroulement temporel de la transmission de données dans le récepteur (3) est commandé par une unité de comptage (33) intégrée dans un calculateur de récepteur (32) équipée de compteurs de temps (Z₁, Z₂, Z₃).

6. Procédé selon la revendication 5, caractérisé en ce qu'un premier compteur de temps (Z₁) repère la position des impulsions de bit de position dans les différents mots partiels.

7. Procédé selon la revendication 5 ou 6, caractérisé en ce qu'un second compteur de temps (Z₂) contrôle la largeur d'impulsion (tₚ) de l'impulsion de bit de position.

8. Procédé selon l'une quelconque des revendications 2 à 7, caractérisé en ce que, par l'émetteur (1) avant la première impulsion de bit de position, est émise une impulsion de bit de départ sous la forme d'une impulsion rectangulaire.

9. Procédé selon l'une quelconque des revendications 2 à 8, caractérisé en ce que, par l'émetteur (1) après l'impulsion de bit de position du dernier mot partiel est émise une impulsion de bit de position supplémentaire pour un mot partiel de contrôle, qui sert de sécurité de code de l'information transmise auparavant.

10. Procédé selon la revendication 9, caractérisé en ce que l'impulsion de bit de position du mot partiel de contrôle est émise toujours dans la même position et à celle-ci est ainsi toujours associée la même succession de bits binaires dans le récepteur (3).

11. Procédé selon la revendication 9, caractérisé en ce que la position de l'impulsion du bit de position du mot partiel de contrôle est déterminée par formation de la parité ou addition des successions de bits binaires précédemment transmises du mot global binaire.

12. Procédé selon la revendication 8, caractérisé en ce que par l'émetteur (1), avant l'impulsion de bit de départ, est émise une impulsion de bit auxiliaire, et en ce que la transmission de données n'est déclenchée que lorsque l'écart temporel (t) entre l'impulsion de bit auxiliaire et l'impulsion de bit de départ se trouve à l'intérieur d'un intervalle prédéterminé par un troisième compteur de temps (Z₃).

13. Procédé selon l'une quelconque des revendications 8 ou 12, caractérisé en ce que la largeur d'impulsion (t_{S}) de l'impulsion de bit de départ est déterminée par le second compteur de temps (Z₂) et en ce que la transmission de données n'est déclenchée que lorsque la largeur d'impulsion (t_{S}) se trouve à l'intérieur d'un intervalle prédéterminé.

14. Procédé selon l'une quelconque des revendications 2 à 13, caractérisé en ce qu'aux impulsions de bit de position est associée une caractéristique différente en fonction du mot partiel et/ou de la position à l'intérieur du mot partiel.

15. Procédé selon la revendication 14, caractérisé en ce qu'aux impulsions de bit de position est associée une caractéristique alternée dans des mots partiels successifs.

16. Procédé selon la revendication 14, caractérisé en ce qu'aux impulsions de bit de position est associée une caractéristique alternée dans des positions successives à l'intérieur d'un mot partiel.

17. Procédé selon l'une quelconque des revendications 14 à 16, caractérisé en ce que la largeur d'impulsion des impulsions de bit de position est modifiée.

18. Procédé selon la revendication 17, caractérisé en ce qu'en vue de la variation de la largeur d'impulsion de l'impulsion de bit de position, la durée d'impulsion de l'impulsion de bit de position est choisie différemment.

19. Procédé selon la revendication 17, caractérisé en ce qu'en vue de la variation de la largeur d'impulsion des impulsions de bit de position, le nombre des périodes d'oscillation d'une fréquence de modulation est choisi différemment.

20. Procédé selon l'une quelconque des revendications 14 à 16, caractérisé en ce que la fréquence des impulsions de bit de position est modifiée.

21. Procédé selon la revendication 20, caractérisé en ce que deux fréquences différentes (f₁, f₂) sont choisies.
